Europäisches Patentamt

European Patent Office

Office européen des brevets

Veröffentlichungsnummer: **0 496 335 A1**

## EUROPÄISCHE PATENTANMELDUNG

Anmeldenummer: **92100879.3**

Anmeldetag: **20.01.92**

Int. Cl.5: **H02B 1/052**, H05K 7/14

Priorität: **24.01.91 AT 149/91**

Veröffentlichungstag der Anmeldung:
**29.07.92 Patentblatt 92/31**

Benannte Vertragsstaaten:
**AT DE FR GB IT**

Anmelder: **Siemens Aktiengesellschaft Österreich
Siemensstrasse 88 - 92
A-1210 Wien(AT)**

**AT**

Anmelder: **SIEMENS AKTIENGESELLSCHAFT
Postfach 221 634
W-8000 München 22(DE)**

**DE FR GB IT**

Erfinder: **Glatzl, Andreas
Baumgartenstrasse 50/10
A-1140 Wien(AT)**

Auf genormte Hutschiene aufschnappbarer Träger für Leiterplatten.

Ein auf genormte Hutschienen aufschnappbarer Träger für Leiterplatten enthält zusätzlich zu den Nuten (14,15), die zum Aufschnappen auf die Hutschiene (1) dienen, zwei Nuten (16,17) zum Befestigen einer Leiterplatte (22). Die Nuten (16,17) befinden sich in erweiterten Befestigungselementen (8,9), die biegeelastisch an den Enden eines Steges (5) angeordnet sind, dessen Endbereiche in Form dünner Platten (6,7) ausgebildet sind. Alle Nuten (14-17) sind den dünnen Platten (6,7) beidseitig unmittelbar benachbart, sodaß sich im zusammengebauten Zustand die miteinander fluchtenden ebenen Randstreifen (3) der Hutschiene (1) und die Leiterplatte (22) eng an die dünnen Platten (7) anlegen. Dadurch ergibt sich eine geringe Bauhöhe sowie eine Verriegelung durch Aufhebung der Federwirkung der Platten (6,7). Ein erfindungsgemäßes Befestigungselement (8) gewährt eine große Federlänge für seinen, auch zum Lösen der Wirkverbindung mit der Hutschiene (1) dienenden Teil (10).

FIG 1

Die Erfindung betrifft einen auf eine genormte Hutschiene aufschnappbaren Träger für Leiterplatten mit einem Steg, an dessen Enden senkrecht zu seiner Längserstreckung verlaufende Befestigungselemente, von denen mindestens eines biegeelastisch verbunden ist, angeformt sind, die einen durch eine Nut gegebenen hakenförmigen Querschnitt aufweisen, wobei die beiden zum Umgreifen der Kanten der Hutschiene dienenden Nuten einander zugekehrt und zueinander parallel sind.

Ein derartiger Teil befindet sich auf dem Markt, ist unter der Bestellnummger 01201578 bestellbar bei der Firma Phoenix Contact Ges.m.b.H., Favoritenstr. 321, A-1108 Wien, Österreich, und wird zur Befestigung von mit printbaren Reihenklemmen bestückten Leiterplatten in elektronischen Geräten verwendet. Die Hutschiene kann dabei als Konstruktionselement für den Gehäuseaufbau dienen. Für einen besonderen Anwendungsfall sind auf der Leiterplatte neben den Reihenklemmen Flachkabelstecker angeordnet und polweise durchkontaktiert, sodaß damit ein Übergang von den Kundenleitungen zu geräteinternen Flachkabelleitungen hergestellt ist.

Hutschienen sind aus Eisenblech erzeugte genormte Trägerelemente. Sie weisen im Querschnitt einen trogförmigen Mittelteil mit beidseitig angesetzten, miteinander fluchtenden Randstreifen, die eine Befestigungsebene definieren, auf. Der marktgängige Träger besteht aus einem Steg, an dessen Enden hakenförmige Elemente senkrecht angesetzt sind und Nuten aufweisen, die zueinander weisen und parallel sind. Mindestens eines der hakenförmigen Elemente ist biegeelastisch verformbar. Der Vorgang des Aufschnappens beinhaltet das Aufsetzen einer Nut auf eine Kante der Hutschiene und ein mit Kraft erfolgendes Schwenken des Trägers im Sinne einer Näherung der anderen Nut an die andere Kante unter Vergrößerung des zwischen den Nuten bestehenden Abstandes im elastischen Bereich soweit, bis die andere Nut mit dem anderen Rand der Hutschiene rückfedernd in Wirkverbindung tritt.

Die Befestigung der Leiterplatte auf dem Steg erfolgt durch Verschraubung. Deshalb muß der Steg eine zur Aufnahme von Gewinden in vorgefertigten Sacklöchern ausreichende Höhe aufweisen. Auch sind die Nuten so angeordnet, daß die untere, der Befestigungsebene zugekehrte Stegfläche von dieser beträchtlich entfernt bleibt. Aus beiden Merkmalen resultiert eine große Bauhöhe. Ein weiterer Nachteil ergibt sich durch die Verschraubung. Wegen der in der Längsmittelebene des Steges angeordneten Schrauben muß die Leiterplatte die ganze Stegbreite überdecken, sodaß die verfügbare Bestückungslänge der Leiterplatte eingeschränkt wird. Außerdem müssen die Leiterplatten gelocht sein, wozu noch der Arbeitsaufwand für sechs Schraubungen je Leiterplatte kommt.

In der Offenlegungsschrift EP-0 294 660 A2 ist eine stirnseitige Anordnung eines Moduls angegeben, von denen eine Mehrzahl innerhalb eines Gehäuserahmens unterbringbar ist, wobei zur Befestigung des Moduls innerhalb des Gehäuserahmens eine Clipbefestigung mit zwei definierten Schwenkstellungen vorgesehen ist. Durch eine besonders vorteilhafte Formgebung der als Doppelhebel ausgebildeten Clipbefestigung sind zwei Stellungen des Clips fixiert, nämlich die des Entnahmezustandes, also der Offenstellung, und jene der Schließstellung bei der das Clip in eine zugehörige Hinterschneidung an der Frontplatte des Moduls einrastet.

Ein erfindungsgemäßer Träger ist dadurch gekennzeichnet, daß die beiden Endbereiche des Steges in Form je einer dünnen Platte ausgebildet sind, daß die zur Wirkverbindung mit den Randstreifen der Hutschiene vorgesehenen Nuten den ersten, hinteren Flächen der dünnen Platten unmittelbar benachbart sind und derart die hinteren Plattenflächen plan an die Randstreifen der Hutschiene anlegbar sind, daß die Befestigungselemente sich nach beiden Seiten der durch die dünnen Platten gegebene Ebene erstreckende Teile aufweisen und in ihnen zwei weitere, den zweiten vorderen Flächen der dünnen Platten unmittelbar benachbarte Nuten zugeordnet sind, die einander zugekehrt und zueinander parallel sind und zur Wirkverbindung mit den Kanten der Leiterplatte dienen, daß ein auch zur Entriegelung dienender Teil eines Befestigungselementes zur Erzielung der erforderlichen Federlänge am Ende des anderen Teils dieses Befestigungselementes angesetzt ist und daß die in diesem anderen Teil angeordnete Nut mittig unterbrochen ist und daß der Mittelbereich des Steges eine Form aufweist, die durch die von den zweiten, vorderen Flächen der dünnen Platten definierte Ebene begrenzt ist.

Der Vorteil liegt darin, daß eine wesentliche Verringerung der Gesamtbauhöhe, eine Verkürzung der Montagezeit durch Entfall der Verschraubung sowie eine Vergrößerung der nutzbaren Leiterplattenlänge erzielt wird. Bei aneinandergereihten Leiterplatten ist zwischen je zwei solchen nur ein Träger erforderlich. Eine Verriegelung ist dadurch gegeben, daß im montierten Zustand die Federwirkung der dünnen Platten aufgehoben ist, da diese zwischen den Randstreifen der Hutschiene und der Leiterplatte eingebettet sind.

Anhand von Zeichnungsfiguren soll nachfolgend eine vorteilhafte Ausführungsform des erfindungsgemäßen Trägers näher beschrieben werden. Es zeigen:

Fig. 1      zwei Risse sowie eine Schnittdarstellung und die

Fig. 2 - 5     den Vorgang der Befestigung von Leiterplatten an einer Hutschiene.

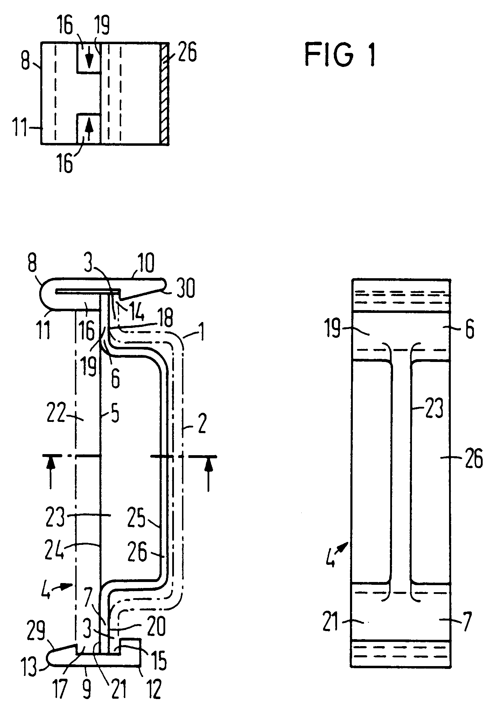

Die in Fig. 1 erkennbare genormte Trag- oder Hutschiene 1 die aus Stahlblech gewalzt ist, weist einen Mittelteil 2 mit etwa trogförmigem Querschnitt auf, an den sich beidseitig Randstreifen 3 anschließen, die miteinander fluchten und eine Befestigungsebene definieren. Der auf diese Hutschiene 1 aufschnappbare Träger 4 ist aus Hartplastik gefertigt und weist einen Steg 5 auf, dessen beide Endbereiche in Form dünner Platten 6, 7 ausgebildet sind. An die Enden dieser Platten 6, 7 sind die eigentlichen Befestigungselemente 8, 9 angeformt, die aus Teilen 10, 11 bzw. 12, 13 bestehen. In den Teilen 10, 12 ist je eine Nut 14, 16 zum Umgreifen der Kanten der Hutschiene 1 sowie in den Teilen 11, 13 je eine Nut 15, 17 zum Umgreifen einer Leiterplatte 22 angeordnet. Diese Nuten 14 - 17 sind jeweils den Flächen 18, 20 bzw. 19, 21 der Platten 6 bzw. 7 unmittelbar benachbart, sie weisen paarweise zueinander und sind zueinander parallel. Durch diese Anordnung der Nuten 14 - 17 sind im montierten Zustand die Platten 6, 7 zwischen den Randstreifen 3 der Hutschiene 1 und der Leiterplatte 22 eingespannt und ihre Wirkung als Biegefedern ist aufgehoben. Damit ist eine Verriegelung gegeben.

Die Form des dünnen, die Platten 6, 7 verbindenden Mittelteiles 23 des Steges 5 ist durch eine Kante 24, die in der die Flächen 19, 21 der Platten 6, 7 verbindenden Ebene liegt, einerseits sowie durch eine, dem trogförmigen Querschnitt des Mittelteils 2 der Hutschiene 1 angenäherte Kante 25 anderseits definiert. An letzterer Kante 25 ist zur Versteifung ein Band 26 angeformt, das übergangsfrei mit den Platten 6, 7 verbunden ist.

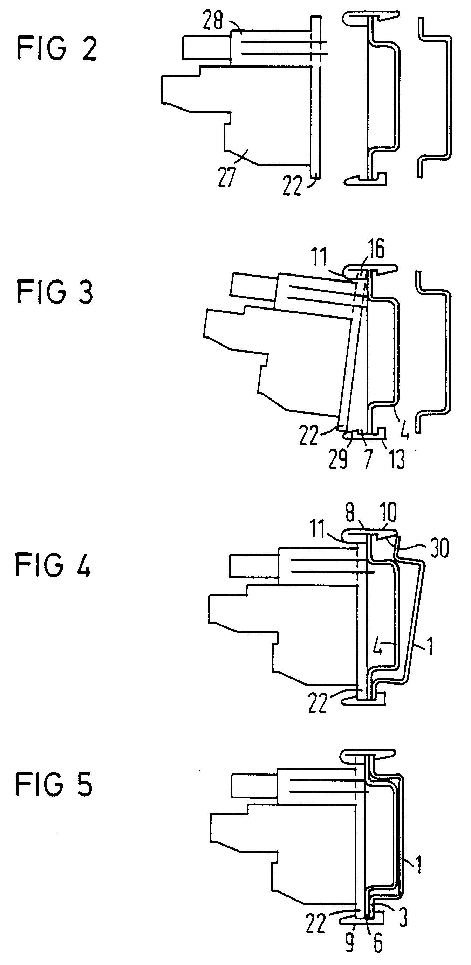

In den nachfolgenden Fig. 2 - 5 ist der Vorgang der Befestigung von Leiterplatten an einer Hutschiene mittels eines erfindungsgemäßen Trägers in vier Stufen erläutert. Fig. 2 zeigt die dabei verwendeten Teile, die Hutschiene 1, den Träger 4 sowie die Leiterplatte 22 mit z.B. aufgeschwallten Reihenklemmen 27 und Flachkabelsteckern 28. Fig. 3 zeigt, wie die Leiterplatte 22 mit dem Träger 4 verbunden wird. Dazu wird die Leiterplatte 22 mit einer oberen Ecke in einen Teil der mittig unterbrochenen Nut 16 eingeführt, die im Teil 11 des Befestigungselementes 8 angeordnet ist und anschließend mit Druck bis zu der im Teil 13 befindlichen Nut 7 geschwenkt, in die sie einrastet. Der Teil 13 ist dazu mit einer Anlauframpe 29 versehen. Fig. 4 zeigt, wie der schon mit der Leiterplatte 22 verbundene Träger 4 auf die Hutschiene 1 aufgeschnappt wird. Die untere Kante der Hutschiene 1 dient dabei als Schwenklager. Hier wird der Vorteil der erfindungsgemäßen Ausgestaltung des Befestigungselementes 8 ersichtlich. Dessen Teil 10 ist nämlich am Ende des Teiles 11 angesetzt und weist dadurch die erforderliche Federlänge auf. Teil 10 besitzt ebenfalls eine Anlauframpe 30. Er dient ebenso zum Lösen der Wirkverbindung zwischen Hutschiene 1 und Träger 4. In Fig. 5 ist bei zusammengebautem Zustand die Verriegelung insbesondere des gewichtsbelasteten Befestigungselementes 9 durch die Einspannung der mit ihm verbundenen Platte 6 zwischen einem Randstreifen 3 der Hutschiene 1 und der Leiterplatte 22 deutlich erkennbar.

## Patentansprüche

1. Auf genormte Hutschiene aufschnappbarer Träger für Leiterplatten mit einem Steg, an dessen Enden senkrecht zu seiner Längserstreckung verlaufende Befestigungselemente, von denen mindestens eines biegeelastisch verbunden ist, angeformt sind, die einen durch eine Nut gegebenen hakenförmigen Querschnitt aufweisen, wobei die beiden zum Umgreifen der Kanten der Hutschiene dienenden Nuten einander zugekehrt und zueinander parallel sind, **dadurch gekennzeichnet,** daß die beiden Endbereiche des Steges (5) in Form je einer dünnen Platte (6,7) ausgebildet sind, daß die zur Wirkverbindung mit den Randstreifen (3) der Hutschiene (1) vorgesehenen Nuten (14, 15) den ersten, hinteren Flächen (18,20) der dünnen Platten (6,7) unmittelbar benachbart sind und derart die hinteren Plattenflächen (18,20) plan an die Randstreifen (3) der Hutschiene (1) anlegbar sind, daß die Befestigungselemente (8,9) sich nach beiden Seiten der durch die dünnen Platten (6,7) gegebenen Ebene erstreckende Teile (10,11 bzw. 12,13) aufweisen und in ihnen zwei weitere, den zweiten vorderen Flächen (19,21) der dünnen Platten (6,7) unmittelbar benachbarte Nuten (16,17) zugeordnet sind, die einander zugekehrt und zueinander parallel sind und zur Wirkverbindung mit den Kanten der Leiterplatte (22) dienen, daß ein auch zur Entriegelung dienender Teil (10) eines Befestigungselementes (8) zur Erzielung der erforderlichen Federlänge am Ende des anderen Teils (11) dieses Befestigungselementes (8) angesetzt ist und daß die in diesem anderen Teil (11) angeordnete Nut (16) mittig unterbrochen ist und daß der Mittelbereich (23) des Steges (5) eine Form aufweist, die durch den von den zweiten, vorderen Flächen (19,21) der dünnen Platten (6,7) definierte Ebene begrenzt ist.

FIG 1

FIG 2

FIG 3

FIG 4

FIG 5

| Europäisches Patentamt | EUROPÄISCHER RECHERCHENBERICHT | Nummer der Anmeldung |
| | | EP 92 10 0879 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-A-2 027 157 (SIEMENS) <br> * das ganze Dokument * <br> --- | 1 | H02B1/052 <br> H05K7/14 |
| Y | DE-U-8 513 894 (LUTH) <br> * das ganze Dokument * <br> --- | 1 | |
| A,D | EP-A-0 294 660 (SCHLEICHER ELECTRONIC GMBH) <br> * das ganze Dokument * <br> --- | 1 | |
| A | FR-A-2 211 993 (SOCIETE DESPRODUITS INDUSTRIELS ITT) <br> * das ganze Dokument * <br> --- | 1 | |
| A | EP-A-0 315 057 (MONTAGUTTI) <br> * das ganze Dokument * <br> ----- | 1 | |
| | | | **RECHERCHIERTE SACHGEBIETE (Int. Cl.5 )** <br><br> H02B <br> H05K |

Der vorliegende Recherchenbericht wurde für alle Patentansprüche erstellt

| Recherchenort | Abschlußdatum der Recherche | Prüfer |
|---|---|---|
| DEN HAAG | 21 APRIL 1992 | TOUSSAINT F.M.A. |